(19) Europäisches Patentamt
European Patent Office
Office européen des brevets

(11) Veröffentlichungsnummer: **0 038 299**
**B1**

(12) # EUROPÄISCHE PATENTSCHRIFT

(45) Veröffentlichungstag der Patentschrift: **14.11.84**

(51) Int. Cl.³: **C 09 B 23/16,** D 06 P 1/42, D 21 H 3/80

(21) Anmeldenummer: **81810133.9**

(22) Anmeldetag: **06.04.81**

(54) **Kationische Verbindungen.**

(30) Priorität: **10.04.80 CH 2757/80**

(43) Veröffentlichungstag der Anmeldung: **21.10.81 Patentblatt 81/42**

(45) Bekanntmachung des Hinweises auf die Patenterteilung: **14.11.84 Patentblatt 84/46**

(84) Benannte Vertragsstaaten: **CH DE FR GB IT LI SE**

(56) Entgegenhaltungen:
**FR - A - 809 395**
**FR - A - 963 261**
**FR - A - 2 336 451**

(73) Patentinhaber: **CIBA-GEIGY AG, Postfach, CH-4002 Basel (CH)**

(72) Erfinder: **Stingelin, Willy, Stockackerstrasse 1A, CH-4153 Reinach (CH)**
Erfinder: **Loew, Peter, Dr., Concordiastrasse 23, CH-4142 Münchenstein (CH)**

**EP 0 038 299 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue kationische Verbindungen, Verfahren zu deren Herstellung sowie deren Verwendung als Farbstoffe zum Färben und Bedrucken von Textilmaterialien, Leder und Papier.

Die neuen kationischen Verbindungen entsprechen der Formel I

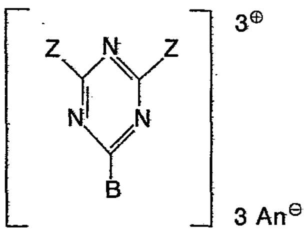

(I)

worin bedeuten:

Z unabhängig voneinander einen Rest der Formel

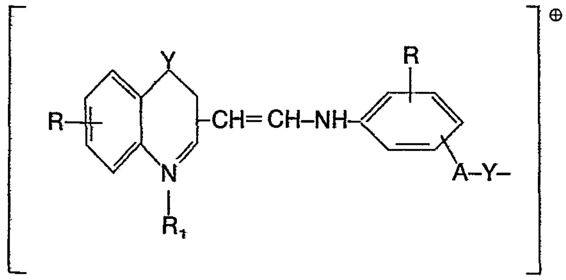

B das gleiche wie Z oder einen der folgenden kationischen Reste:

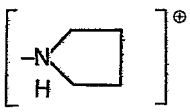 , 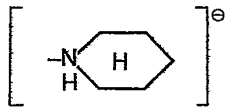 , 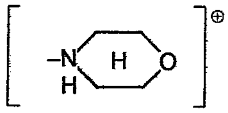 oder 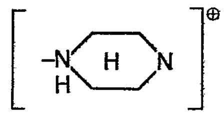

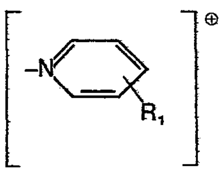 , 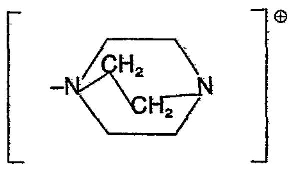 , $\left[-NH(CH_2)_p-N(R_1)_3\right]^{\oplus}$ ,

$\left[-NH(CH_2)_p-NH(R_1)_2\right]^{\oplus}$ , $\left[-N(R_1)_3\right]^{\oplus}$ oder 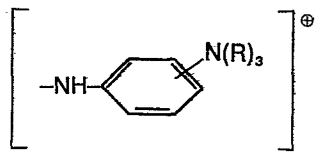 ,

p die Zahl 2 oder 3;

R unabhängig voneinander Wasserstoff, gegebenenfalls substituiertes $C_1$–$C_4$ Alkyl, gegebenenfalls substituiertes $C_1$–$C_4$ Alkoxy, die $NO_2$-Gruppe, Acylamino, Halogen oder die CN-Gruppe;

$R_1$ unabhängig voneinander gegebenenfalls substituiertes $C_1$–$C_4$ Alkyl oder $C_3$–$C_4$ Alkenyl;

X ein Schwefelatom oder die Gruppe

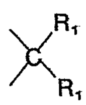

wobei beide Reste $R_1$ miteinander zu einem carbocyclischen 5- oder 6-Ring verknüpft sein können;

A die direkte Bindung, –NH-alkylen ($C_1$–$C_4$), –O-alkylen ($C_1$–$C_4$), alkylen ($C_1$–$C_4$), phenylen, –O-phenylen oder –NH-phenylen;

Y –NH–, –$NR_1$–, –O– oder –S–; und

An ein Anion.

R in der Bedeutung einer gegebenenfalls substituierten $C_1$–$C_4$ Alkylgruppe stellt eine unverzweigte oder verzweigte Alkylgruppe dar wie z.B. eine Methyl-, Äthyl-, n- oder iso-Propyl- oder n-, sec- oder tert.Butylgruppe; diese Gruppen können substituiert sein z.B. durch eine $C_1$–$C_4$ Alkoxygruppe wie die Methoxy-, Äthoxy-, n- und iso-Propoxygruppe oder n- und iso-Butoxygruppe; durch CN, durch Halogen wie Fluor, Chlor oder Brom, durch Phenyl (seinerseits gegebenenfalls weitersubstituiert durch z.B. Halogen, Alkyl und/oder Alkoxy) durch $CONH_2$ oder durch eine am N-Atom mono- oder disubstituierte (z.B. durch $C_1$–$C_4$ Alkyl) Carbonsäureamidgruppe.

Bedeutet R eine gegebenenfalls substituierte $C_1$–$C_4$ Alkoxygruppe so handelt es sich um eine unverzweigte oder verzweigte Alkoxygruppe wie z.B. um die Methoxy-, Äthoxy-, n- und iso-Propoxy- oder n- und iso-Butoxygruppe welche Gruppen weitersubstituiert sein können, beispielsweise durch Phenyl.

Handelt es sich bei R um eine Acylaminogruppe, so kommt z.B. die Benzoylamino- oder Acetylaminogruppe in Frage.

Bedeutet R ein Halogenatom so handelt es sich vor allem um das Fluor, Chlor oder Bromatom.

Es ist aber auch möglich, dass der Substituent R mehrmals in ein und demselben Benzolring vorkommen kann.

In den bevorzugten kationischen Verbindungen der Formel I bedeutet R Wasserstoff oder eine unsubstituierte, unverzweigte $C_1$–$C_4$ Alkylgruppe, insbesondere die Methylgruppe oder eine unsubstituierte, unverzweigte Alkoxygruppe, vor allem die Methoxygruppe oder Halogen, insbesondere Chlor.

Bedeutet $R_1$ eine gegebenenfalls substituierte $C_1$–$C_4$ Alkylgruppe, so handelt es sich um eine unverzweigte oder verzweigte Alkylgruppe wie z.B. um die Methyl-, Äthyl-, n- und iso-Propyl- oder n- und iso-Butylgruppe; diese Gruppen können substituiert sein beispielsweise durch $C_1$–$C_4$-Alkoxy (unverzweigt und verzweigt wie Methoxy-, Äthoxy-, n- und iso-Propoxy) durch CN oder Halogen (Fluor, Chlor oder Brom) durch gegebenenfalls $C_1$–$C_4$ Alkyl oder Halogen substituiertes Phenyl oder durch die $CONH_2$-Gruppe. Bedeutet $R_1$ eine Alkenylgruppe so kommt beispielsweise die Allylgruppe in Frage.

In den bevorzugten kationischen Verbindungen der Formel I bedeutet $R_1$ eine unsubstituierte, unverzweigte $C_1$–$C_4$ Alkylgruppe, vor allem die $CH_3$-Gruppe.

Bedeutet X die 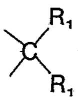 Gruppierung,

wo beide Reste $R_1$ miteinander zu einem carbocyclischen 5- oder 6-Ring verknüpft sein können, so handelt es sich vor allem um den unsubstituierten Cyclopentan- oder Cyclohexanring.

In den bevorzugten kationischen Verbindungen der Formel I bedeutet X die 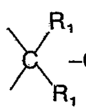 –Gruppierung, worin $R_1$ je einen unverzweigten, unsubstituierten $C_1$–$C_4$ Alkylrest darstellt; insbesondere bedeutet X die

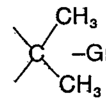 –Gruppierung.

Bedeutet A eine -alkylen ($C_1$–$C_4$)-, –NH-alkylen ($C_1$–$C_4$)- oder –O-alkylen ($C_1$–$C_4$)-Brücke so kommen als «alkylen» Brücken beispielsweise die Methylen-, Äthylen-, n- und iso-Propylen oder n- und iso-Butylenbrücke in Frage.

In den bevorzugten kationischen Verbindungen der Formel I ist A in m- oder p-Stellung zur –CH = CH–NH-Brücke gebunden und bedeutet entweder die direkte Bindung oder –O-Phenylen- oder –NH-Phenylen.

Y in der Bedeutung einer $-NR_1$-Gruppe stellt eine –N-alkyl ($C_1$–$C_4$)-Gruppe dar wie die $-N{\cdot}CH_3$-, $-N{\cdot}C_2H_5$-, $-N{\cdot}C_3H_7$-Gruppe, wo der Alkylrest noch definitionsgemäss substituiert sein kann, vor allem durch CN oder Halogen.

In den bevorzugten kationischen Verbindungen der Formel I bedeutet Y die –NH- oder $-NR_1$-Gruppe, insbesondere die $-N{\cdot}CH_3$-Gruppe.

B in der Bedeutung einer $[-NH(CH_2)_p-N(R_1)_3]^\oplus$ oder $[-NH(CH_2)_p-NH(R_1)_2]^\oplus$ Gruppe stellt beispielsweise folgende Gruppen dar:

$-NH-CH_2-CH_2-N^\oplus(CH_3)_3$,

$-NH-CH_2-CH_2-N^\oplus(C_2H_5)_3$,

$-NH-CH_2-CH_2-N^\oplus(iso-C_3H_7)_3$,

$-NH-CH_2-CH_2-N^\oplus(n-C_3H_7)_3$,

$-NH-CH_2-CH_2-\overset{\oplus}{N}H(CH_3)_2$,

$-NH-CH_2-CH_2-\overset{\oplus}{N}H(C_2H_5)_2$,

$-NH-CH_2-CH_2-\overset{\oplus}{N}H(n-C_3H_7)_2$,

$-NH-CH_2-CH_2-\overset{\oplus}{N}H(iso-C_3H_7)_2$,

$-NH-CH_2-CH_2-\overset{\oplus}{N}H(n-C_4H_9)_2$,

$-NH-CH_2-CH_2-\overset{\oplus}{N}H(tert.-C_4H_9)_2$,

$-NH-CH_2-CH_2\overset{\oplus}{\underset{}{N}}\overset{CH_3}{}(C_2H_5)_2$

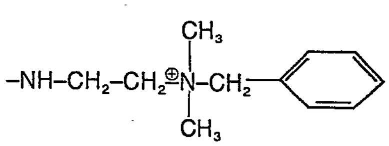

$-NH-CH_2-CH_2-CH_2-N^\oplus(CH_3)_3$,

$-NH-CH_2-CH_2-CH_2-N^\oplus(C_2H_5)_3$,

$-NH-CH_2-CH_2-CH_2-N^\oplus(iso-C_3H_7)_3$,

$-NH-CH_2-CH_2-CH_2-N^\oplus(n-C_3H_7)_3$,

$-NH-CH_2-CH_2-CH_2-\overset{\oplus}{N}H(CH_3)_2$,

$-NH-CH_2-CH_2-CH_2-\overset{\oplus}{N}H(C_2H_5)_2$,

$-NH-CH_2-CH_2-CH_2-\overset{\oplus}{N}H\ (n-C_3H_7)_2$,

$-NH-CH_2-CH_2-CH_2-\overset{\oplus}{N}H(iso-C_3H_7)_2$,

$-NH-CH_2-CH_2-CH_2-\overset{\oplus}{N}H(n-C_4H_9)_2$,

$-NH-CH_2-CH_2-CH_2-\overset{\oplus}{N}H(tert.C_4H_9)_2$,

$-NH-CH_2-CH_2-CH_2-\overset{\oplus}{N}(CH_2CN)_3$,

$-NH-CH_2-CH_2-CH_2\overset{\oplus}{N}\overset{CH_3}{}(C_2H_5)_2$

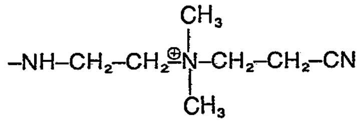

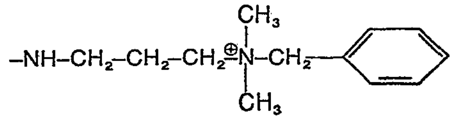

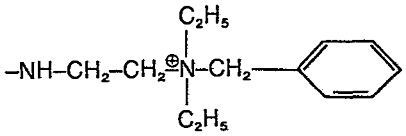

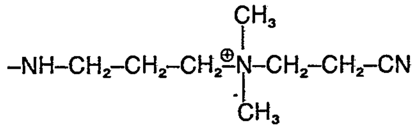

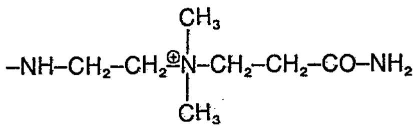

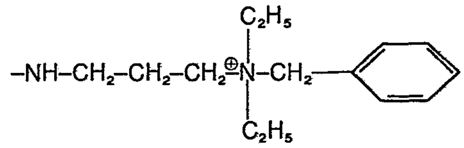

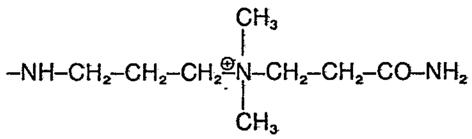

In der Bedeutung einer $[-N(R_1)_3]^{\oplus}$Gruppe stellt B beispielsweise die folgenden Gruppen dar:

$-\overset{\oplus}{N}(CH_3)_3$ , $-\overset{\oplus}{N}(C_2H_4OCH_3)_3$ , $-\overset{\oplus}{N}(C_2H_5)_3$ , $-\overset{\oplus}{N}(C_2H_4CN)_3$ ,

$-\overset{\oplus}{N}(CH_2COOH)_3$ , $-\overset{\oplus}{N}(C_3H_7-n)_3$ , $-\overset{\oplus}{N}(C_4H_8CONH_2)_3$, 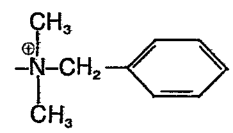

In bevorzugten kationischen Verbindungen der Formel I hat B die gleiche Bedeutung wie Z oder stellt eine der Gruppen

$$\left[-NH(CH_2)_p-\overset{\oplus}{N}(R_1)_3\right] \text{ oder } \left[-NH(CH_2)_p-\overset{\oplus}{N}H)R_1)_2\right] \text{ dar, worin}$$

p und $R_1$ die angegebene Bedeutung haben.

Als Anionen An kommen sowohl anorganische wie organische Anionen in Frage; beispielsweise sind genannt: Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen oder komplexe Anionen wie das von Chlorzinkdoppelsalzen.

Bevorzugte Anionen An sind das Formiat-, Acetat-, Lactat-, Chlorid-, Sulfat- und Phosphation.

Die neuen kationischen Verbindungen der Formel I stellen dreifach geladene grünstichig bis rotstichig gelbe Verbindungen dar, die nach bekannter Art und Weise hergestellt werden können.

Beispielsweise erhält man die Verbindungen der Formel I, worin B nicht mit Z identisch ist, derart, dass man 1 Mol eines Diamins der Formel II

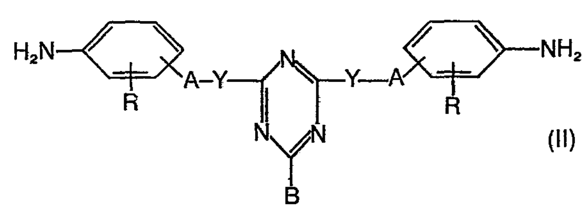

(II)

mit 2 Mol einer Aldehydverbindung der Formel III

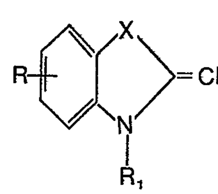

(III)

in Gegenwart einer Säure HAn kondensiert.

Die Diamine der Formel II und die Aldehydverbindungen der Formel III sind bekannt oder können nach bekannten Methoden hergestellt werden. Beispielsweise erhält man die Diamine der Formel II derart, dass man im sym. Trichlortriazin die Chloratome stufenweise mit Verbindungen der Formel

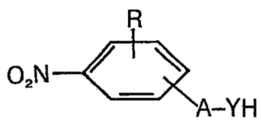

und mit B–H (bzw. Pyridinderivaten) umsetzt und anschliessend im Kondensationsprodukt die $NO_2$-Gruppe zur $NH_2$-Gruppe reduziert.

Verbindungen der Formel I, worin B mit Z identisch ist werden beispielsweise derart erhalten, dass man 1 Mol eines Triamins der Formel IV

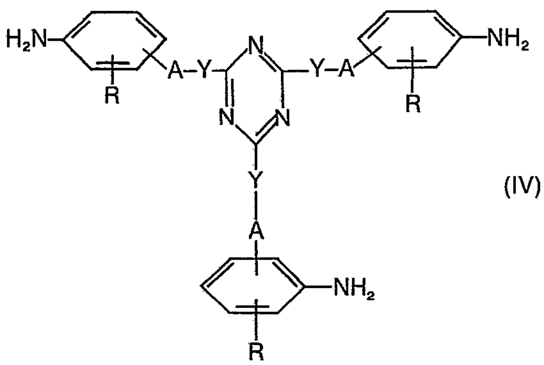

(IV)

mit 3 Mol einer Aldehydverbindung der Formel III in Gegenwart einer Säure HAn kondensiert.

Als Aldehydverbindungen der Formel III kommen z.B. in Frage:

1,3,3-Trimethyl-2-methylen-indolin-ω-aldehyd

1,3,3-Trimethyl-5-chlor-2-methylen-indolin-ω-aldehyd

1,3,3-Trimethyl-5-phenyl-2-methylen-indolin-ω-aldehyd und

1,3,3-Trimethyl-5-cyan-2-methylen-indolin-ω-aldehyd.

Die Kondensationsreaktion des Diamins der Formel II bzw. des Triamins der Formel IV mit der Aldehydverbindung der Formel III erfolgt nach bekannter Art und Weise, z.B. in wässrigem Medium bei einer Temperatur von etwa 0 bis 100 °C in Gegenwart einer Säure HAn. Bei dieser Säure HAn handelt es sich um eine organische Säure, wie Essigsäure oder Arylsulfonsäure, vor allem Benzolsulfonsäure oder um eine anorganische Säure, wie Salzsäure, Schwefelsäure oder Phosphorsäure.

Nach der Kondensationsreaktion werden die neuen kationischen Verbindungen gegebenenfalls vom Reaktionsmedium getrennt und getrocknet. Falls gewünscht oder erforderlich, kann man in den kationischen Verbindungen der Formel I das Anion An nach bekannter Art und Weise gegen ein anderes Anion austauschen.

Die neuen Farbstoffe lassen sich aber auch direkt, nach Einengen des Reaktionsmediums, in eine flüssige Handelsform überführen.

Gegenüber den aus der FR-A-2 336 451 chemisch nächstvergleichbaren Verbindungen die anstelle des trifunktionellen Cyanurrestes eine bifunktionelle Alkylenbrücke enthalten, weisen die anmeldungsgemässen Verbindungen eine völlig unerwartete Farbstärke bei im übrigen keine nachteiligen Effekte auf und sind zudem gekennzeichnet durch einen besseren Ausziehgrad was ökonomisch (da eine bestimmte Farbtiefe mit weniger Farbstoff erhalten werden kann) und ökologisch (weniger Abwasserbelastung) ist.

Verwendung finden die neuen kationischen Verbindungen der Formel I als Farbstoffe zum Färben und unter Zusatz von Binde- und gegebenenfalls Lösungsmitteln zum Bedrucken von mit kationischen Farbstoffen anfärbbaren Materialien, insbesondere Textilmaterialien die z.B. vorteilhaft aus Homo- oder Mischpolymerisaten des Acrylnitrils bestehen oder synthetische Polyamide oder Polyester, welche durch saure Gruppen modifiziert sind. Man färbt vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Durch die Applikation der Farbstoffe lassen sich egale grünstichig bis rotstichig gelbe Färbungen bzw. Drucke herstellen, die sich durch sehr gute Allgemeinechtheiten auszeichnen.

Des weiteren können die neuen kationischen Farbstoffe auch zum Färben und Bedrucken von natürlichen und regenerierten Cellulosematerialien vor allem von Baumwolle und Viscose verwendet werden, wobei man ebenfalls grünstichig bis rotstichig gelbe farbstarke Ausfärbungen erhält. Die neuen Farbstoffe haben auf diesen Textilmaterialien ein gutes Ziehvermögen, einen guten Ausziehgrad und die erhaltenen Färbungen weisen sehr gute Echtheiten, vor allem Nassechtheiten auf.

Eine weitere Verwendung der neuen kationischen Farbstoffe der Formel I liegt in der Anwendung zum Färben von Papier aller Arten, vor allem von gebleichtem, ungeleimtem und geleimtem ligninfreiem Papier. Ganz besonders geeignet sind diese Verbindungen zum Färben von ungeleimtem Papier (Tissues) als Folge ihrer sehr hohen Affinität zu diesem Substrat.

Die neuen Verbindungen ziehen sehr gut auf diese Substrate auf, wobei die Abwasser farblos bleiben, was ein eminenter ökologischer Vorteil insbesondere im Hinblick auf die heutigen Abwasser-Gesetze ist.

Die erhaltenen Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte «Tissues» erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien,

Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil und ermöglicht einen viel breiteren Einsatz dieses bekannten wirtschaftlichen Verfahrens.

Die neuen Farbstoffe können nach den verschiedensten Verfahren auf das Papiermaterial appliziert werden z.B. in der Massefärbung, in der Leimpresse und aus wässrigen Tinten nach der INK-JET Methode.

Schlussendlich können die neuen Farbstoffe noch zum Färben von Leder (durch z.B. Sprühen, Bürsten und Tauchen) verwendet werden und zur Bereitung von Tinten.

Die folgenden Beispiele veranschaulichen die Erfindung. Die Temperaturen sind in Grad Celsius angegeben. Teile (T) bedeuten Gewichtsteile und %-Angaben sind Gewichtsprozente.

Beispiel 1

8,6 T 2,4,6-s-Tri-(4'-aminophenylamino)-triazin und 12,7 T 1,3,3-Trimethyl-2-methylenindolin-ω-aldehyd werden in 50 T Wasser und 41 T Methanol verrührt. Man erwärmt das Gemisch in ca. 20 bis 30 Minuten auf 60 bis 65° und beginnt gleichzeitig mit dem Zutropfen von 32,8 T 8%iger wässriger Salzsäure. Nach 2½ Stunden ist das Zutropfen der Salzsäure beendet. Man rührt noch 1 Stunde bei gleicher Temperatur weiter, entfernt anschliessend das Methanol aus der Reaktionslösung durch Abdestillieren im Vakuum. Der ausgefallene Farbstoff wird mit 200 T Kaltwasser verrührt, abfiltriert, mit wenig Wasser gewaschen und bei 70° getrocknet. Man erhält 20,5 T oranges Farbstoffpulver folgender Struktur:

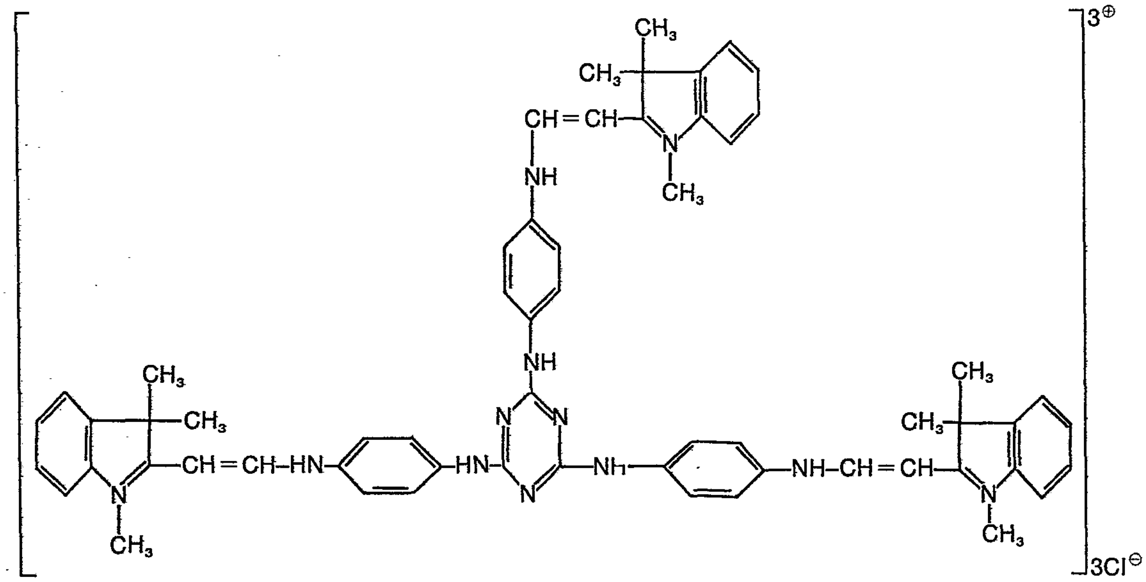

Verwendet man anstelle von Salzsäure entsprechende Mengen an Phosphor- oder Schwefelsäure, so erhält man den gleichen Farbstoff als Phosphat resp. Sulfat. Werden anstelle der erwähnten anorganischen Säuren Ameisen-, Essig- oder Milchsäure verwendet, so erhält man den gleichen Farbstoff jeweils als Formiat, Acetat oder Lactat. Farbstoffe mit den genannten organischen Gegenionen zeichnen sich durch eine hervorragende Wasserlöslichkeit aus, was sich besonders vorteilhaft auf die Herstellung einer flüssigen Handelsform auswirkt.

Wird gemäss Beispiel 1 die Salzsäure durch Ameisensäure ersetzt, kann der Farbstoff nach Abdestillieren des Methanols mit verdünnter Essigsäure direkt in eine flüssige Handelsform überführt werden.

Beispiel 2

6,2 T 2-Amino-4,6-di-(4'aminophenylamino)-s-triazin, hergestellt durch Reduktion der entsprechenden Dinitroverbindung, werden in analoger Weise, wie in Beispiel 1 beschrieben, mit 8,4 T 1,3,3-Trimethyl-2-methylenindolin-ω-aldehyd, 35 T Wasser, 27,5 T Methanol und 21,8 T 8%iger wässriger Salzsäure kondensiert und anschliessend isoliert. Man erhält 14,5 T eines gelben Farbstoffs folgender Struktur:

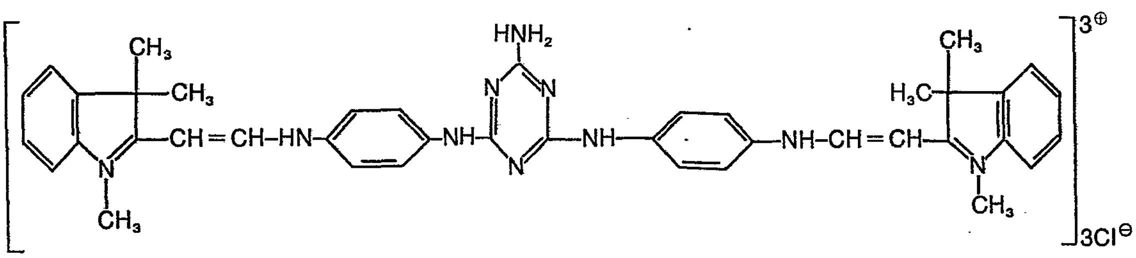

Auf analoge Art und Weise, unter Berücksichtigung der Stöchiometrie gemäss Beispiel 1, und unter Verwendung der in den folgenden Tabellen aufgeführten Komponenten, erhält man dreifach geladene Farbstoffe, die als Chlorid, Phosphat, Sulfat, Formiat, Acetat oder Lactat abgeschieden werden. Die Farbstoffe ergeben auf Papier die in der letzten Kolonne der Tabellen genannte Nuance.

Tabelle I

| Beispiel | 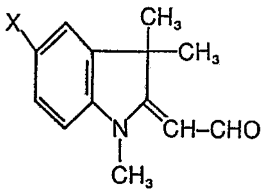 | 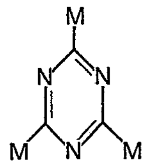 | Nuance |
|---|---|---|---|
| | X | M | |
| 3 | Cl | 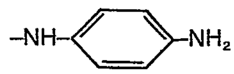 | gelb |
| 4 | H | 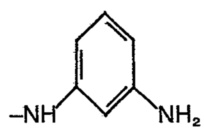 | grünstichiges gelb |
| 5 | Cl | 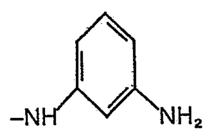 | grünstichiges gelb |
| 6 | H | 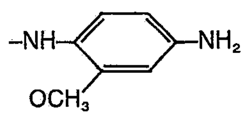 | goldgelb |
| 7 | H | 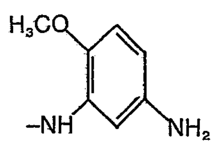 | gelb |
| 8 | H | 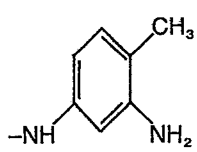 | grünstichiges gelb |
| 9 | H | 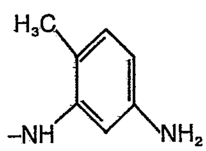 | grünstichiges gelb |
| 10 | H | 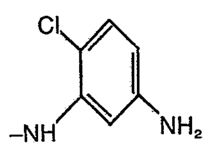 | grünstichiges gelb |
| 11 | H | 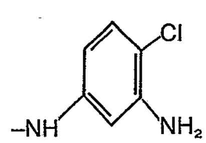 | grünstichiges gelb |

Tabelle I (Fortsetzung)

| Beispiel | | | Nuance |
|---|---|---|---|
| | 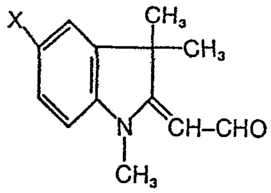 | 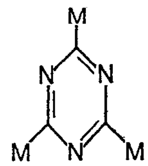 | |
| | X | M | |
| 12 | H | 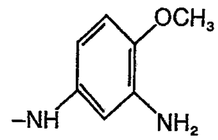 | gelb |
| 13 | H | 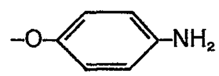 | grünstichiges gelb |

Tabelle II

| Beispiel | | | | Nuance |
|---|---|---|---|---|
| | 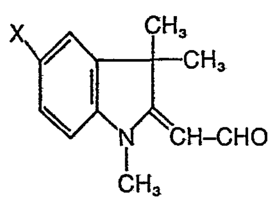 | 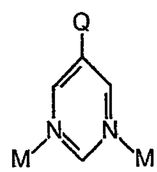 | | |
| | X | M | Q | |
| 14 | H | 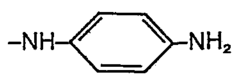 | 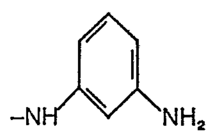 | gelb |
| 15 | H | 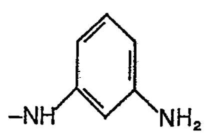 | 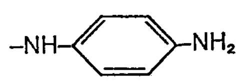 | gelb |
| 16 | H | 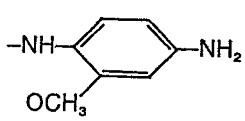 | 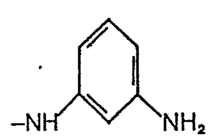 | goldgelb |
| 17 | H | 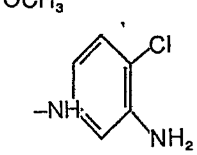 | 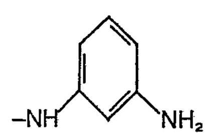 | grünstichiges gelb |
| 18 | H | 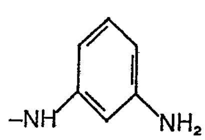 | 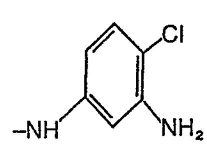 | grünstichiges gelb |
| 19 | H | 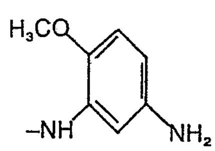 | 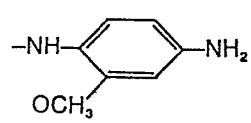 | gelb |

Tabelle II (Fortsetzung)

| Beispiel | 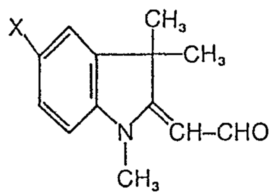 | 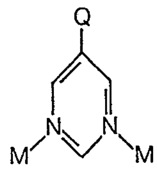 | | Nuance |
|---|---|---|---|---|
| | X | M | Q | |
| 20 | H | 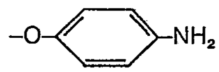 | 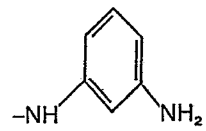 | grünstichiges gelb |
| 21 | H | 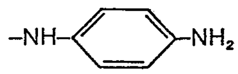 | $-NH(CH_2)_3-\overset{H\oplus}{N}(CH_3)_2$ | gelb |
| 22 | H | 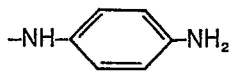 | $-NH(CH_2)_3-\overset{\oplus}{N}(CH_3)_3$ | gelb |
| 23 | H | 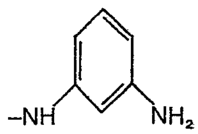 | $-NH(CH_2)_3-\overset{H\oplus}{N}(CH_3)_2$ | grünstichiges gelb |
| 24 | H | 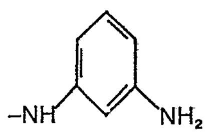 | $-NH(CH_2)_3-\overset{\oplus}{N}(CH_3)_3$ | grünstichiges gelb |
| 25 | H | 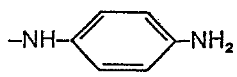 | 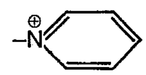 | goldgelb |
| 26 | H | 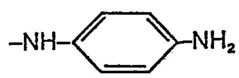 | 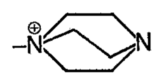 | goldgelb |

Tabelle III

| Beispiele | 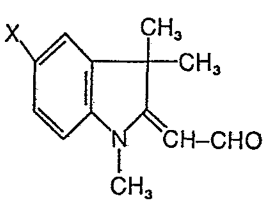 | 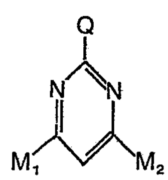 | | | Nuance |
|---|---|---|---|---|---|
| | X | $M_1$ | $M_2$ | Q | |
| 27 | H | 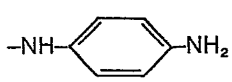 | 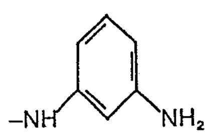 | 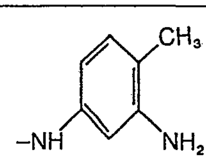 | grünstichiges gelb |
| 28 | H | 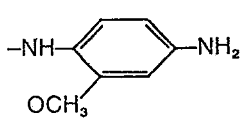 | 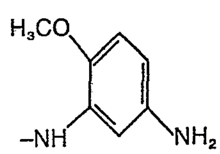 | 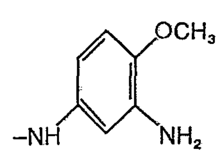 | goldgelb |

Beispiel 29

Man vermischt 50 T chemisch gebleichte Buche Sulfit mit 50 T gebleichtem RKN 15 (Mahlgrad 22° SR) und 2 T des Farbstoffes gemäss Beispiel 1 in Wasser (pH 6, Wasserhärte 10° dH, Temperatur 20°, Flottenverhältnis 1 : 40). Nach 15minütigem Rühren werden Papierblätter auf einem Frank-Blattbildner hergestellt.

Das Papier ist in einer sehr intensiven Goldgelbnuance gefärbt. Das Abwasser ist völlig farblos. Der Ausziehgrad erreicht praktisch 100%. Die Licht- und Nassechtheiten sind ausgezeichnet.

Beispiel 30

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5%ige Färbung, Flottenverhältnis 1 : 400, Wasserhärte 10° dH, pH 6, Temperatur 20°).

Es entsteht auf der Papierbahn eine farbstarke Orangenuance von mittlerer Intensität. Das Abwasser ist völlig farblos.

Beispiel 31

10 T Baumwollgewebe (gebleichte mercerisierte Baumwolle) werden in einem Labor-Baumfärbeapparat in 200 T einer Flotte (Wasserhärte 10° dH, pH 4, 3 Umwälzungen der Färbeflotte pro Minute) die 0,05 T des Farbstoffes gemäss Beispiel 1 gefärbt. Die Temperatur wird in 60 Minuten von 20 auf 100° aufgeheizt, dann während 15 Minuten konstant gehalten.

Die Färbeflotte ist völlig ausgezogen. Es entsteht auf dem Baumwollgewebe eine farbstarke orange Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke orange Färbung, die eine gute Lichtechtheit und sehr gute Nassechtheit besitzt.

**Patentansprüche**

1. Kationische Verbindungen der Formel I

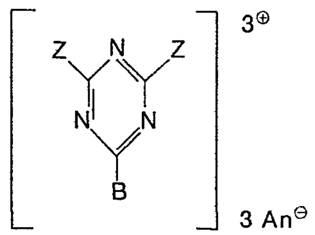

(I)

worin bedeuten:

Z unabhängig voneinander einen Rest der Formel

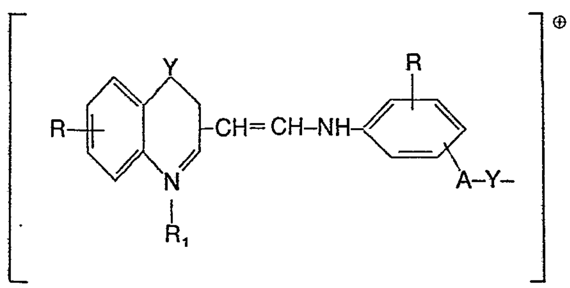

B das gleiche wie Z oder einen der folgenden kationischen Reste:

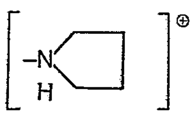 , 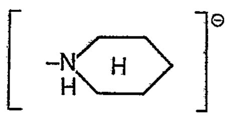 , 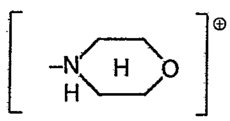 oder 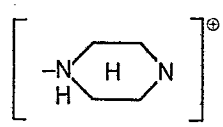

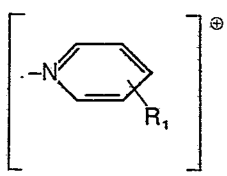 , 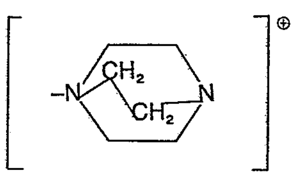 , $\left[-NH(CH_2)_p-N(R_1)_3\right]^{\oplus}$ ,

$\left[-NH(CH_2)_p-NH(R_1)_2\right]^{\oplus}$ , $\left[-N(R_1)_3\right]^{\oplus}$ oder 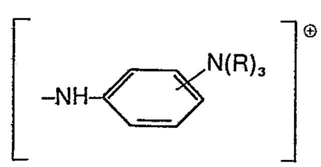 ,

worin p die Zahl 2 oder 3 ist,

R unabhängig voneinander Wasserstoff, gegebenenfalls substituiertes $C_1$–$C_4$ Alkyl, gegebenenfalls substituiertes $C_1$–$C_4$ Alkoxy, die $NO_2$-Gruppe, Acylamino, Halogen oder die CN-Gruppe;

$R_1$ unabhängig voneinander gegebenenfalls substituiertes $C_1$–$C_4$ Alkyl oder $C_3$–$C_4$ Alkenyl;

X ein Schwefelatom oder die Gruppe

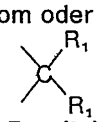

wobei beide Reste $R_1$ miteinander zu einem carbocyclischen 5- oder 6-Ring verknüpft sein können;

A die direkte Bindung, –NH-alkylen ($C_1$–$C_4$), –O-alkylen ($C_1$–$C_4$), alkylen ($C_1$–$C_4$), phenylen, –O-phenylen oder –NH-phenylen;

Y –NH–, –$NR_1$–, –O– oder –S–; und

An ein Anion.

2. Kationische Verbindungen der Formel I gemäss Anspruch 1, dadurch gekennzeichnet, dass die Symbole Z und B die gleichen Reste bedeuten.

3. Kationische Verbindungen der Formel I gemäss Anspruch 1, dadurch gekennzeichnet, dass R Wasserstoff, $CH_3$, $OCH_3$ oder Chlor bedeutet.

4. Kationische Verbindungen der Formel I gemäss Anspruch 1, dadurch gekennzeichnet, dass $R_1$ unsubstituiertes, unverzweigtes $C_1$–$C_4$-Alkyl bedeutet.

5. Kationische Verbindungen gemäss Anspruch 4, dadurch gekennzeichnet, dass $R_1$ die $CH_3$-Gruppe bedeutet.

6. Kationische Verbindungen gemäss Anspruch 1, dadurch gekennzeichnet, dass X die

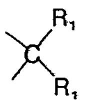 Gruppe

darstellt.

7. Kationische Verbindungen gemäss Anspruch 6, dadurch gekennzeichnet, dass X die $>C(CH_3)_2$ Gruppe darstellt.

8. Kationische Verbindungen gemäss Anspruch 1, dadurch gekennzeichnet, dass A in m- oder p-Stellung zur –CH = CH–NH-Brücke gebunden ist.

9. Kationische Verbindungen gemäss Anspruch 1, dadurch gekennzeichnet, dass A die direkte Bindung oder –O-Phenylen- oder –NH-Phenylen darstellt.

10. Kationische Verbindungen gemäss Anspruch 1, dadurch gekennzeichnet, dass Y die –NH- oder –$NR_1$-Gruppe darstellt.

11. Kationische Verbindungen gemäss Anspruch 10, dadurch gekennzeichnet, dass Y die –N·$CH_3$-Gruppe bedeutet.

12. Kationische Verbindung der Formel

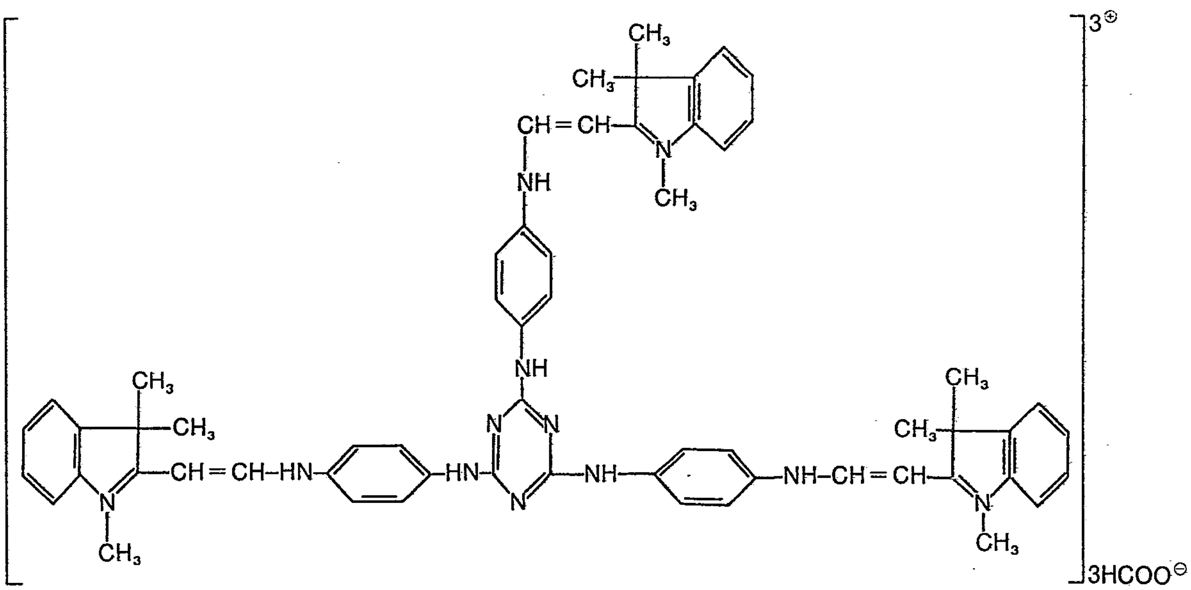

13. Verfahren zur Herstellung von kationischen Verbindungen der Formel I gemäss Anspruch 1, dadurch gekennzeichnet, dass man im Falle, wenn B nicht Z bedeutet, 1 Mol eines Diamins der Formel II

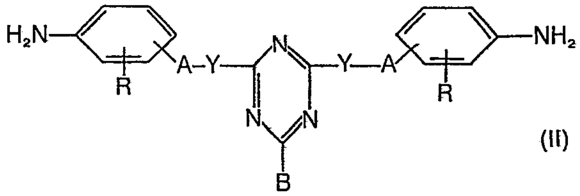

(II)

mit 2 Mol einer Aldehydverbindung der Formel III

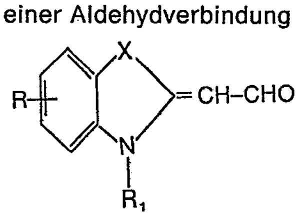

(III)

in Gegenwart einer Säure HAn kondensiert, oder im Falle, wenn B mit Z identisch ist, 1 Mol eines Triamins der Formel IV

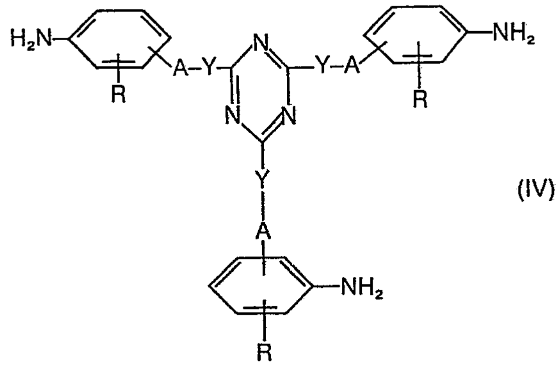

(IV)

mit 3 Mol einer Aldehydverbindung der Formel III in Gegenwart einer Säure HAn kondensiert, wobei

die Symbole R, A, Y, B, $R_1$ und X die unter Formel I in Anspruch 1 angegebene bedeutung haben.

14. Verwendung der kationischen Verbindungen der Formel I gemäss Anspruch 1 oder der gemäss Anspruch 13 erhaltenen kationischen Verbindungen als Farbstoffe zum Färben und Bedrucken von Textilmaterialien, Leder und Papier aller Arten.

15. Verwendung gemäss Anspruch 14 zum Färben und Bedrucken von Polyacrylnitrilmaterialien oder sauer modifizierten Polyester- oder Polyamidmaterialien, sowie natürlichen und regenerierten Cellulosematerialien.

16. Verwendung gemäss Anspruch 14 zum Färben und Bedrucken von ligninfreiem, gebleichtem und ungeleimtem Papier.

## Claims

1. Cationic compounds of the formula I

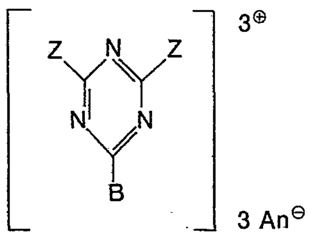

(I)

wherein

Z is, independently of the other, a radical of the formula

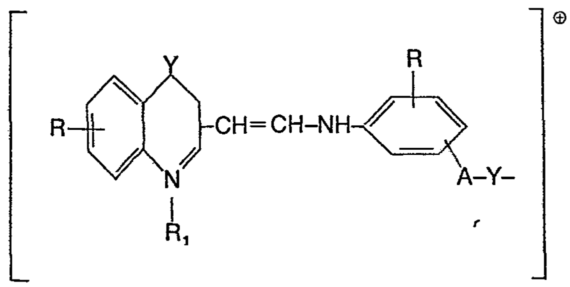

B is the same as Z, or is any one of the following cationic radicals:

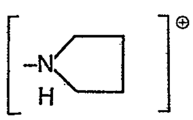 , 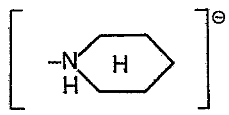 , 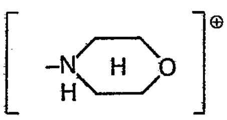 oder 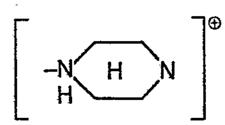

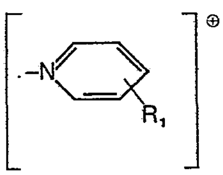 , 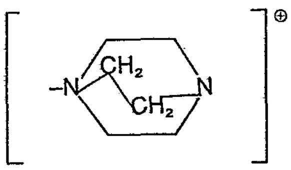 , $\left[-NH(CH_2)_p-N(R_1)_3\right]^{\oplus}$ ,

$\left[-NH(CH_2)_p-NH(R_1)_2\right]^{\oplus}$ , $\left[-N(R_1)_3\right]^{\oplus}$ oder 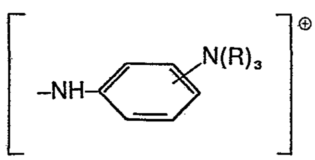 ,

in which p is 2 or 3,

R is, independently of the other, hydrogen, unsubstituted or substituted $C_1$–$C_4$-alkyl, unsubstituted or substituted $C_1$–$C_4$-alkoxy, the $NO_2$ group, acylamino, halogen or the CN group,

$R_1$ is, independently of the other, unsubstituted or substituted $C_1$–$C_4$-alkyl or $C_3$–$C_4$-alkenyl,

X is a sulfur atom or the group

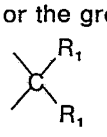

in which both $R_1$ radicals can be linked with each other to form a carbocyclic 5- or 6-membered ring,

A is the direct bond, –NH-alkylene-($C_1$–$C_4$), –O-alkylene-($C_1$–$C_4$), alkylene-($C_1$–$C_4$), phenylene, –O-phenylene or –NH-phenylene,

Y is –NH–, –$NR_1$–, –O– or –S–, and

An is an anion.

2. Cationic compounds of the formula I according to claim 1, characterised in that the symbols Z and B are identical radicals.

3. Cationic compounds of the formula I according to claim 1, characterised in that R is hydrogen, $CH_3$, $OCH_3$ or chlorine.

4. Cationic compounds of the formula I according to claim 1, characterised in that $R_1$ is unsubstituted, straight-chain $C_1$–$C_4$-alkyl.

5. Cationic compounds according to claim 4, characterised in that $R_1$ is the $CH_3$ group.

6. Cationic compounds according to claim 1, characterised in that X is the

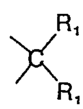

group.

7. Cationic compounds according to claim 6, characterised in that X is the $>C(CH_3)_2$ group.

8. Cationic compounds according to claim 1, characterised in that A is bound in the m- or p-position with respect to the –CH = CH–NH– bridge.

9. Cationic compounds according to claim 1, characterised in that A is the direct bond, or is –O-phenylene or –NH-phenylene.

10. Cationic compounds according to claim 1, characterised in that Y is the –NH- or –$NR_1$-group.

11. Cationic compounds according to claim 10, characterised in that Y is the –N·$CH_3$-group.

12. Cationic compound of the formula

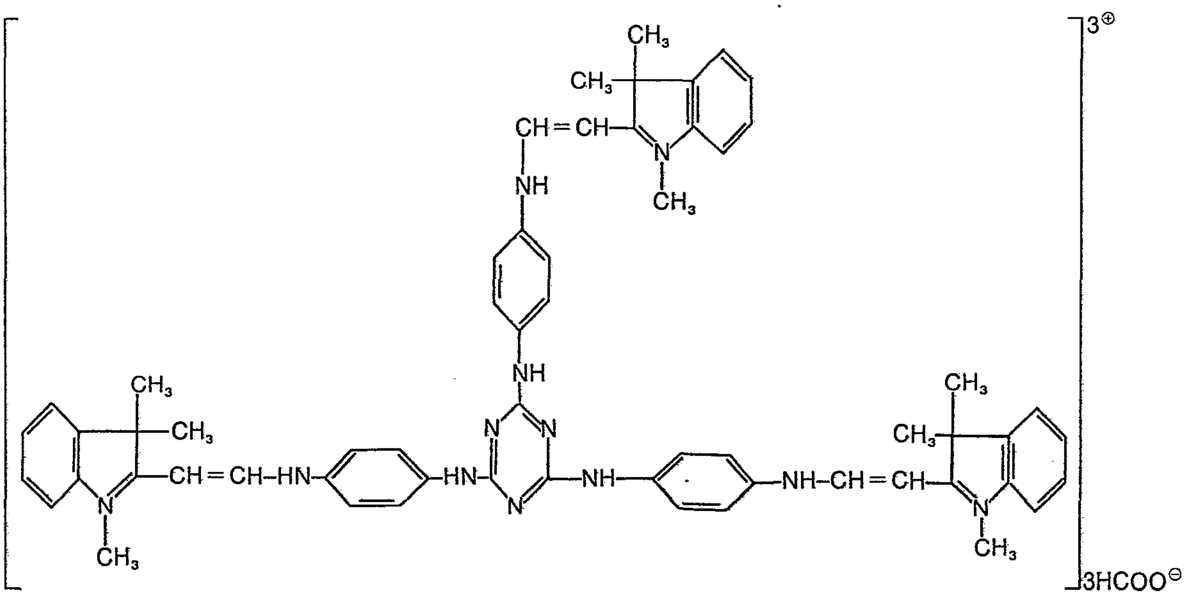

13. Process for producing cationic compounds of the formula I according to claim 1, characterised in that, in the case where B is not identical to Z, 1 mol of a diamine of the formula II

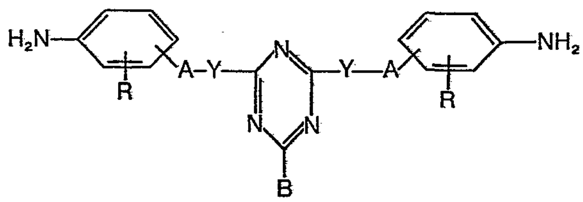

(II)

is condensed with 2 mols of an aldehyde compound of the formula III

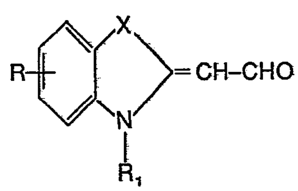

(III)

in the presence of an acid HAn; or, in the case where B is identical to Z, 1 mol of a triamine of the formula IV

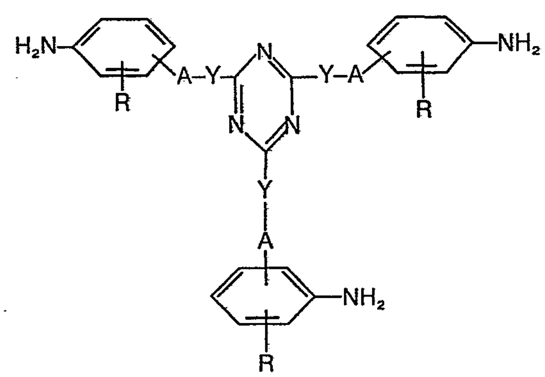

(IV)

is condensed with 3 mols of an aldehyde compound of the formula III in the presence of an acid HAn, the symbols R, A, Y, B, $R_1$ and X having the meanings defined under the formula I in claim 1.

14. Use of the cationic compounds of the formula I according to claim 1 or of the cationic compounds obtained according to claim 13 as dyes for dyeing and printing textile materials, leather and paper of all types.

15. Use according to claim 14 for dyeing and printing polyacrylonitrile materials or acid modified polyester or polyamide materials, as well as natural or regenerated cellulose materials.

16. Use according to claim 14 for dyeing and printing lignin-free, bleached and unsized paper.

**Revendications**

1. Composés cationiques de formule I

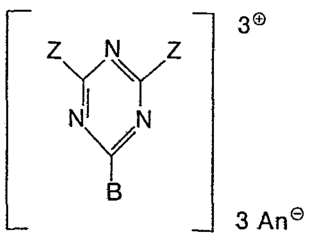

(I)

où:

Z, indépendamment l'un de l'autre, est un radical de formule

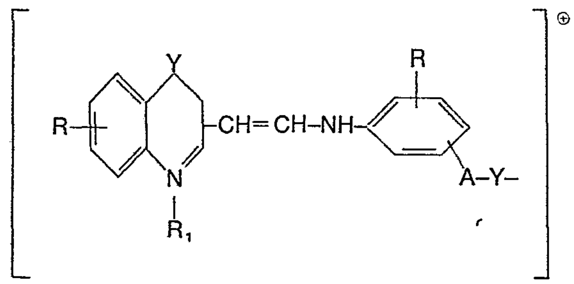

B est identique à Z ou désigne l'un des radicaux cationiques suivants:

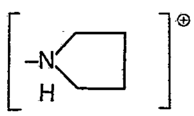 , 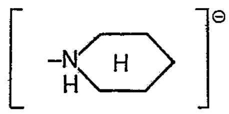 , 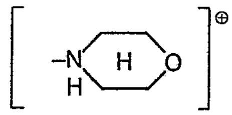 oder 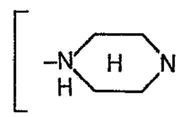

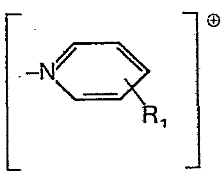 , 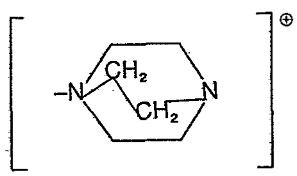 , $[-NH(CH_2)_p-N(R_1)_3]^{\oplus}$ ,

$[-NH(CH_2)_p-NH(R_1)_2]^{\oplus}$ , $[-N(R_1)_3]^{\oplus}$ oder 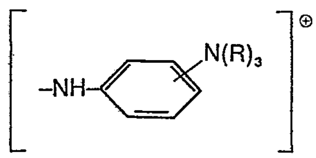 ,

où p est le nombre 2 ou 3,

R, indépendamment l'un de l'autre, désigne l'hydrogène, un groupe alkyle à 1 à 4 atomes de carbone éventuellement substitué, alcoxy à 1 à 4 atomes de carbone éventuellement substitué, le groupe $NO_2$, le groupe acylamino, un halogène ou le groupe CN;

$R_1$, indépendamment l'un de l'autre, désigne un groupe alkyle à 1 à 4 atomes de carbone ou alcényle à 3 à 4 atomes de carbone, éventuellement substitués;

X est un atome de soufre ou le groupe

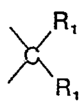

où les deux radicaux $R_1$ peuvent être liés l'un à l'autre pour former un noyau pentagonal ou hexagonal carbocyclique;

A est la liaison directe, le radical -NH-alkylène ($C_1$–$C_4$), -C-alkylène ($C_1$–$C_4$), alkylène ($C_1$–$C_4$), phénylène, -O-phénylène ou -NH-phénylène;

Y est -NH-, $-NR_1-$, -O- ou -S-; et

An est un anion.

2. Composés cationiques de formule I selon la revendication 1, caractérisés en ce que les symboles Z et B désignent les mêmes radicaux.

3. Composés cationiques de formule I selon la revendication 1, caractérisés en ce que R est l'hydrogène ou un radical $CH_3$, $OCH_3$ ou le chlore.

4. Composés cationiques de formule I selon la revendication 1, caractérisés en ce que $R_1$ est un radical alkyle à 1 à 4 atomes de carbone, linéaire et non-substitué.

5. Composés cationiques selon la revendication 4, caractérisés en ce que $R_1$ est le groupe $CH_3$.

6. Composés cationiques selon la revendication 1, caractérisés en ce que X représente le groupe

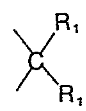 .

7. Composés cationiques selon la revendication 6, caractérisés en ce que X représente le groupe $>C(CH_3)_2$.

8. Composés cationiques selon la revendication 1, caractérisés en ce que A est lié en position m ou p par rapport au pont -CH=CH-NH.

9. Composés cationiques selon la revendication 1, caractérisés en ce que A est la liaison directe ou un groupement -O-phénylène- ou -NH-phénylène.

10. Composés cationiques selon la revendication 1, caractérisés en ce que Y représente le groupe -NH- ou $-NR_1-$.

11. Composés cationiques selon la revendication 10, caractérisés en ce que Y est le groupe $-N{\cdot}CH_3$.

12. Composé cationique de formule

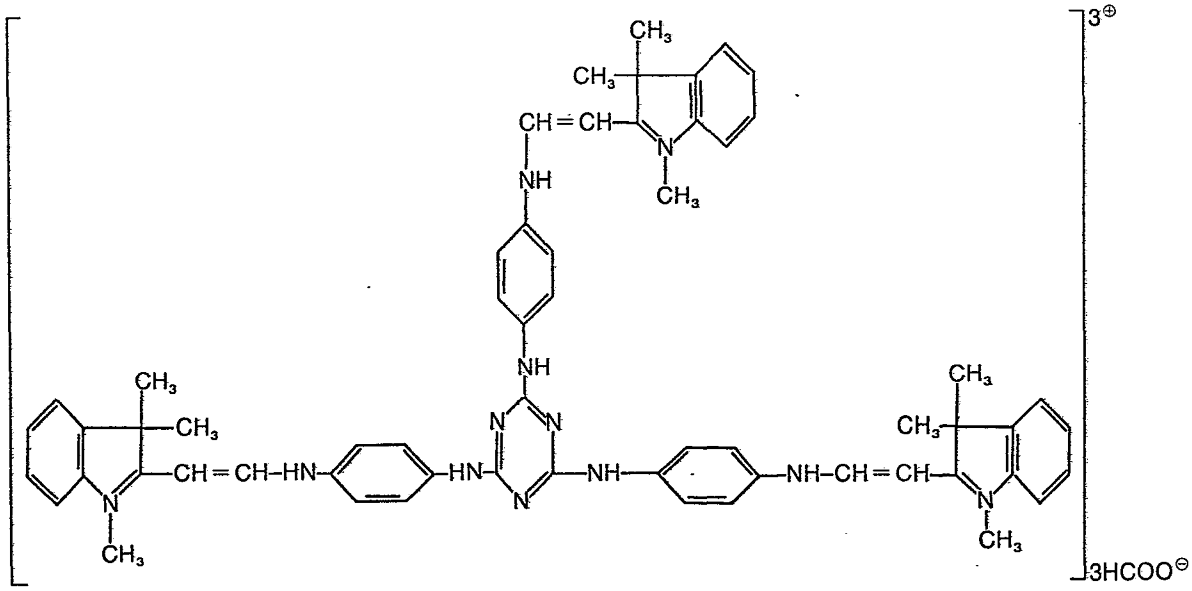

13. Procédé de préparation de composés cationiques de formule I selon la revendication 1, caractérisé en ce que, dans le cas où B n'est pas identique à Z, on condense 1 mole d'une diamine de formule II

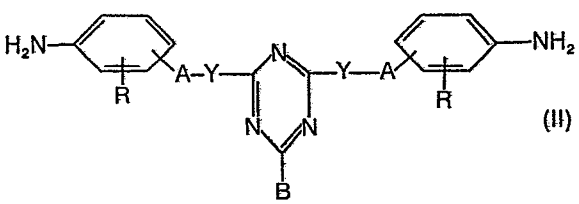

(II)

avec 2 moles d'un composé aldéhyde de formule III

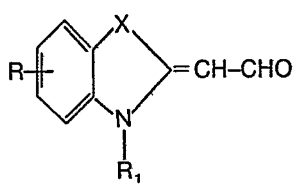

(III)

en présence d'un acide HAn, ou bien, dans le cas où B est identique à Z, on condense 1 mole d'une triamine de formule IV

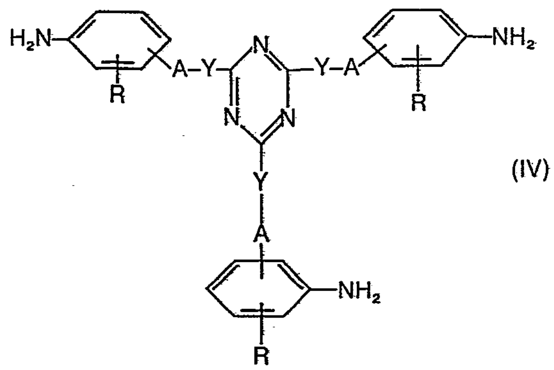

(IV)

avec 3 moles d'un composé aldéhyde de formule III en présence d'un acide HAn, où les symboles R, A, Y, B, $R_1$ et X ont la signification donnée à propos de la formule I dans la revendication 1.

14. Utilisation des composés cationiques de formule I selon la revendication 1 ou des composés cationiques obtenus selon la revendication 13, en tant que colorants pour la teinture et l'impression de matières textiles, de cuir et de papier de toutes sortes.

15. Utilisation selon la revendication 14, pour la teinture et l'impression de matières de polyacrylonitrile ou de matières de polyester ou de polyamide, modifiés aux acides, ainsi que de matières de cellulose naturelle ou régénérée.

16. Utilisation selon la revendication 14, pour la teinture et l'impression de papier exempt de lignine, blanchi et non-collé.